# EUROPÄISCHE PATENTSCHRIFT

(11) **EP 3 186 315 B1**
(45) Veröffentlichungstag und Bekanntmachung des Hinweises auf die Patenterteilung: **26.12.2018**
(21) Anmeldenummer: 15757229.8
(22) Anmeldetag: 28.08.2015
(51) Int. Cl.: C09D 5/00

(54) **OHNE OFFENE FLAMME AKTIVIERBARE ABDICHTUNGSBAHN MIT SCHMELZKLEBSTOFF BESCHICHTUNG UND VERFAHREN ZU DEREN APPLIKATION**
SEALING WEB WHICH CAN BE ACTIVATED WITHOUT OPEN FLAME WITH A MELT ADHESIVE COATING AND METHOD FOR ITS APPLICATION
BANDE D'ÉTANCHÉITÉ POUVANT ÊTRE ACTIVÉE SANS FLAMME NUE DOTÉE DE REVÊTEMENT EN COLLE À FONDRE ET SON PROCÉDÉ D'APPLICATION

(30) Priorität: 28.08.2014 EP 14182608
(43) Veröffentlichungstag der Anmeldung: 05.07.2017
(73) Patentinhaber: Sika Technology AG, 6340 Baar (CH)
(72) Erfinder: GOESSI, Matthias, 8610 Uster (CH)
(74) Vertreter: Sika Patent Attorneys
(86) Internationale Anmeldenummer: PCT/EP2015/069729
(87) Internationale Veröffentlichungsnummer: WO 2016/030497

(56) Entgegenhaltungen:
- WO-A1-03/101725
- WO-A1-2011/102170
- US-A1- 2009 191 387

## Beschreibung

### Technisches Gebiet

Die vorliegende Erfindung betrifft Kompositfolien, umfassend eine wasserundurchlässige Substratschicht aus Kunststoff mit einer Beschichtung aus einem flächigen Element aus einem elektrisch leitfähigen Material und einem Schmelzklebstoff, ein Verfahren zum Aufbringen solcher Kompositfolien auf einem Substrat unter Erhitzung des Schmelzklebstoffs mit Hilfe eines magnetischen Wechselfeldes, sowie die Verwendung von magnetischen Wechselfelder zum Aktivieren von Schmelzklebstoffen und Verkleben von wie vorstehend beschriebenen Kompositfolien auf einem Substrat.

### Hintergrund der Erfindung

Dachmembranen werden heute entweder lose verlegt und beschwert, punktuell mechanisch fixiert, punktuell induktiv verklebt oder vollflächig verklebt. Für ein vollflächiges Verkleben einer Membran, beispielsweise auf einem Dach, einem Tagebautunnel oder einem Tübbing, ist es erforderlich, dass die Membran über ihre gesamte Fläche mit einem Klebstoff beschichtet ist, der während oder vor dem Verkleben durch Personal vor Ort aufgetragen, oder bereits fabrikseitig auf eine Seite einer Abdichtungsmembran aufgebracht sein kann. Als geeignete Klebstoffe kommen in diesem Zusammenhang vor allem Haft- oder Schmelzklebstoffe in Betracht.

Bei fabrikseitig aufgebrachten Haftklebstoffen besteht der Nachteil, dass eine Schutzfolie (auch als "release liner" bezeichnet) erforderlich ist, um den Haftklebstoff während des Transports zu schützen. Diese Schutzfolie muss vor einem Verkleben abgezogen werden, führt zu einem erhöhten Materialbedarf und muss nach ihrem Gebrauch entsorgt werden, was mit zusätzlichen Kosten verbunden ist.

Das Aufbringen eines Haftklebstoffs auf der Baustelle vermeidet zwar diese Problematik, ist aber seinerseits mit den Nachteilen verbunden, dass ein zusätzlicher Arbeitsschritt erforderlich ist und die Menge des verwendeten Klebstoffs durch das Personal nur schwer kontrolliert werden kann. Ein weiterer Nachteil von Haftklebstoffen besteht darin, dass die Bahn nach dem Ausrichten nochmals bewegt (d.h., aufgerollt oder gefaltet) werden muss. Schließlich sind auch die Adhäsionskräfte bekannter Haftklebstoffe häufig deutlich geringer sind als die von für diesen Zweck eingesetzten Schmelzklebstoffen.

Schmelzklebstoffe können in einfacher Weise fabrikseitig auf Dachmembranen appliziert werden, und sind bei normalen Verarbeitungsbedingungen für die Dachmembranen nicht klebrig, so dass es nicht erforderlich ist eine voraufgebrachte Schmelzklebstoffschicht mit einer Schutzfolie zu versehen. Von Nachteil ist hier jedoch, dass ein Schmelzklebstoff vor einem Verkleben aufgeschmolzen werden muss, wozu heute auf Baustellen häufig ein Gasbrenner verwendet wird. Dies bedeutet ein erhöhtes Gefahrenpotential, insbesondere, da auf Baustellen häufig auch andere brennbare Materialien vorhanden sind, die sich bei Kontakt mit offenen Flammen entzünden können. Zudem besteht bei der Aktivierung von Schmelzklebstoffen auf wasserdichten Membranen, die selbst aus brennbaren Materialien bestehen, die Gefahr eines Schmelzens bzw. Verbrennens der Membran.

Schließlich erfordert auch die Applikation einer mit einem Schmelzklebstoff ausgerüsteten Membran mit offenen Flammen nach dem Ausrichten ein erneutes Bewegen der Bahn, da die Flamme auf die Schmelzklebstoffschicht gehalten werden und diese anschließend mit dem Substrat, auf dem die Membran befestigt werden soll, in Kontakt gebracht werden muss.

Ein Verfahren, bei dem diese Problematik vermieden wird, ist aus einem anderen Zusammenhang, nämlich für die Applikation und Befestigung von Teppichen auf darunter liegenden Substraten, bekannt. Danach wird eine unter einem Teppich befindliche Schmelzklebstoffschicht durch Aufbringen einer heißen Oberfläche (beispielsweise in Form eines Bügeleisens) auf den Teppich erwärmt und verflüssigt, und so nach dem Abkühlen des Klebstoffs ein Verbund zwischen dem Teppich und dem Trägersubstrat gebildet.

Bei Materialien zur Wasserabdichtung kann ein solches Verfahren jedoch in der Regel nicht genutzt werden, weil über die heiße Oberfläche zunächst die Substratschicht erhitzt wird. Da wasserdichte Membranen in der Regel Dicken von mehreren Millimetern aufweisen und aus Materialien bestehen, die bei höheren Temperaturen beschädigt werden können, würde die Übertragung des beschriebenen Verfahrens das Verfahren sehr energieaufwändig machen. Zudem wären Schmelzklebstoffe erforderlich, die einen signifikant niedrigeren Schmelzpunkt aufweisen als das Kunststoffsubstrat, damit eine Beschädigung der Substratschicht vermieden wird.

Die US 2006/157477 schlägt als Weiterentwicklung für die Aktivierung von mit Heißschmelzklebstoffen beschichteten Klebebändern auf Basis von Kraftpapier eine Erwärmung mit Hilfe von Induktion vor. Dabei wird ein elektromagnetisches Feld mit Hilfe einer leitenden Metallschicht in Wärme umgewandelt und so ein auf die Metallschicht aufgebrachter Schmelzklebstoff erhitzt und verflüssigt.

US 2009/0191387 betrifft eine Schaltkreisanordnung, die eine dielektrische Schicht und eine leitfähige Schicht umfasst, wobei zwischen der dielektrischen Schicht und der leitfähigen Schicht eine Klebschicht angeordnet ist, wobei der Kleber Poly(arylen)ether umfasst.

WO 2011/102170 A1 betrifft thermisch leitfähige Haftklebstoffe, die u.a. expandiertes Graphitpulver sowie Aluminiumoxid enthalten.

Im Bereich der wasserabdichtenden Materialien besteht ein Bedarf nach Kompositfolien, die eine Schmelzklebstoffbeschichtung aufweisen, die sich ohne die Applikation von offenen Flammen erwärmen und so aktivieren lässt. Darüber hinaus besteht ein Bedarf nach Kompositfolien, bei denen sich eine vorhandene Schmelzklebstoffschicht möglichst auch von der der Schmelzklebstoffschicht auf der Kompositfolie entgegenliegenden Seite aktivieren und verflüssigen lässt. Ein solche Kompositfolie würde die Notwendigkeit die Schmelzklebstoffschicht mit offenen Flammen direkt zu behandeln und anschließend auf das Substrat aufzulegen vermeiden, und es ermöglichen, die Kompositfolie zunächst passgenau auf das gegen Wasser abzudichtende Substrat aufzulegen und anschließend auf dem Substrat zu befestigen. Dadurch wäre es viel leichter als bisher möglich, Fehler und Lücken zu vermeiden.

Die vorliegende Erfindung befasst sich mit diesen Problemen.

### Beschreibung der Erfindung

Ein erster Aspekt der vorliegenden Erfindung betrifft eine Kompositfolie, umfassend eine wasserundurchlässige Substratschicht aus Kunststoff mit einer Beschichtung, umfassend ein flächiges Element aus einem elektrisch leitfähigen Material und einen Schmelzklebstoff, wobei das flächige Element aus einem elektrisch leitfähigen Material aus einem Metall oder einer Metalllegierung besteht und wobei der Schmelzklebstoff eine äußere Oberfläche der Kompositfolie bildet.

Unter einem "flächigen" Element ist ein Element zu verstehen, dessen Länge und Breite mindestens um den Faktor 50, bevorzugt mindestens um den Faktor 100, und insbesondere bevorzugt mindestens um den Faktor 1000 größer ist als seine Dicke (0,1-1000 mm). Beispiele von besonders geeigneten flächigen Elementen aus einem elektrisch leitfähigen Material sind beispielsweise Metallfolien oder Metallnetze bzw. -gitter oder -gewebe, in denen bei Kontakt mit einem elektromagnetischen Feld Ringströme induziert werden. Diese Ringströme führen dann zu einer schnellen Erwärmung des Metalls. Es ist aber auch denkbar, dass das leitfähige Material auf Kohlenstofffasern beruht, und beispielsweise in Form eines Kohlenstofffasergitters vorliegt.

Das flächige Element aus einem elektrisch leitfähigen Material kann in Bezug auf seine Länge und Breite die gleichen Dimensionen aufweisen, wie die Kompositfolie, es ist aber auch möglich, dass das flächige Element in Bezug auf seine Länge und Breite kleiner ist als die Kompositfolie. Ebenso ist es möglich, dass die Kompositfolie mehrere flächige Element aus einem oder verschiedenen elektrisch leitfähigen Materialen aufweist, die sich berühren oder beabstandet voneinander angeordnet sein können.

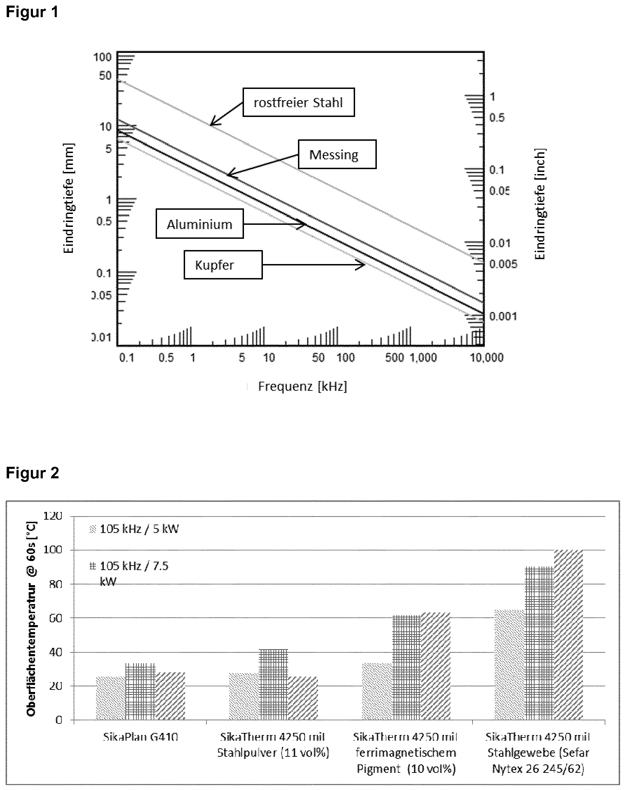

Wenn es sich bei dem elektrisch leitfähigen Material um ein Metall oder eine Metalllegierung handelt ist es bevorzugt, wenn dieses oder diese aus Eisen, beispielsweise in Form von Stahl, Aluminium, Messing oder Kupfer, ausgewählt ist. Dabei muss das Element nicht zwangsläufig ausschließlich aus diesen Metallen bestehen, sondern kann auch übliche weitere Metall- oder Nichtmetallbestandteile enthalten, soweit diese die elektrische Leitfähigkeit des Materials nicht wesentlich beeinträchtigen. Diesbezüglich ist es dem Fachmann geläufig, dass die Eindringtiefe eines elektromagnetischen Feldes mit zunehmender Leitfähigkeit des Metalls abnimmt, so dass beispielsweise Kupfer bei gleicher Frequenz eine signifikant niedrigere Eindringtiefe aufweist als rostfreier Stahl (vgl. Figur 1).

Im Rahmen der vorliegenden Erfindung haben sich insbesondere Metallfolien aus Aluminium und Stahl/Eisen und Metallnetze bzw. Gewebe aus Stahl/Eisen als besonders zweckmäßig herausgestellt. Aluminium in Folienform lässt sich relativ leicht handhaben und verarbeiten, so dass sich mit Aluminium beschichtete Folien relativ leicht herstellen lassen. Eisen weist demgegenüber den Vorteil geringerer Kosten des Rohmaterials auf und zeigt, insbesondere in Form von Eisennetzen bzw. Geweben oder Gittern in Kombination mit Schmelzklebstoffen, immer noch sehr gute Verarbeitungs- und Anwendungseigenschaften.

Zudem ist es bei flächigen Elementen in Form von Netzen, Geweben oder Gittern möglich, diese in die Schmelzklebstoffschicht einzubetten, so dass eine zusätzliche Kaschierung beispielsweise einer Metallfolie auf die Substratschicht, zu der ein zusätzlicher Klebstoff erforderlich sein kann, nicht erforderlich ist. Ein Einbetten hat zudem den Vorteil, dass kein direkter Kontakt zur wasserundurchlässigen Substratschicht besteht, so dass die Gefahr einer Beschädigung dieser Schicht beim Aufschmelzen des Schmelzklebstoffs weiter vermindert werden kann.

Als geeignete Maschenweiten für Gewebe bzw. Netze oder Gitter, insbesondere auf Basis von Metallen, hat sich im Zusammenhang mit der vorliegenden Erfindung ein Bereich von etwa 10 bis etwa 2000 µm, bevorzugt etwa 50 bis etwa 1500 µm, und besonders bevorzugt etwa 100 µm bis etwa 1200 µm, herausgestellt.

Innerhalb der der vorliegenden Erfindung zugrunde liegenden Untersuchungen wurde gefunden, dass nicht leitfähige Materialien, wie beispielsweise ferri- oder ferromagnetische Eisenpigmente, nur unzureichend mit einem magnetischen Wechselfeld koppeln, so dass es nicht möglich war, mit solchen Pulvern ausreichende Aufheizraten in Schmelzklebstoff-Schichten von bis zu 2 mm Dicke zu erzielen. Dies ist insbesondere bei Substratschichten aus Kunststoff ein Problem, weil bei einem nur sehr langsam erhitzten Schmelzklebstoff durch Wärmetransfer auch die Substratschicht signifikant erhitzt wird, was zu einer Beschädigung der Substratschicht führen kann.

Das flächige Element aus einem elektrisch leitfähigen Material weist bevorzugt eine Dicke im Bereich von 1 bis 500 µm, und besonders bevorzugt 50 bis 100 µm auf.

Hinsichtlich der wasserundurchlässigen Substratschicht aus Kunststoff bestehen an die erfindungsgemäße Kompositfolie keine besonderen Anforderungen, es werden jedoch zweckmäßig Substratschichten aus Polyvinylchlorid (PVC), Ethylenvinylacetat (EVA) oder TPO (thermoplastische Olefine) wie z.B. Polypropylen-Polyethylencopolymeren verwendet. Die Dicke der wasserundurchlässigen Substratschicht liegt vorzugsweise im Bereich von 0,1 bis 10 mm, besonders bevorzugt 0,5 bis 5 mm und besonders bevorzugt 1 bis 3 mm.

Auch an den Schmelzklebstoff bestehen keine besonderen Anforderungen, es kann jedoch zweckmäßig sein, wenn als Schmelzklebstoff ein Schmelzklebstoff auf Basis von Ethylenvinylacetat (d.h., mit Ethylenvinylacetat als wesentlichem funktionellem Bestandteil) verwendet wird. Zudem ist es von Vorteil, wenn der Schmelzklebstoff einen Erweichungspunkt aufweist, der unter dem Erweichungspunkt des Kunststoffs der Substratschicht, und insbesondere mindestens etwa 10 Kelvin unter dem Erweichungspunkt des Kunststoffs der Substratschicht, liegt, da sonst die Membran während des Erwärmens beschädigt werden kann.

Der Erweichungspunkt wird hierbei vorzugsweise gemessen durch die Ring & Kugel-Methode, z.B. in Anlehnung an DIN EN 1238.

Die Dicke des aufgebrachten Schmelzklebstoffs liegt vorzugsweise im Bereich von etwa 0,01 bis 5 mm, bevorzugt etwa 0,05 bis 2 mm, und am meisten bevorzugt im Bereich von etwa 0,1 bis 1 mm.

Der Schmelzklebstoff ist so in der Kompositfolie enthalten, dass er eine äußere Oberfläche der Kompositfolie bildet. Wird als Schmelzklebstoff eine Zusammensetzung verwendet, die Bestandteile, z.B. in Form von Weichmachern, enthält, die in die wasserundurchlässige Substratschicht migrieren und deren Funktionalität beeinträchtigen können, so kann es sinnvoll sein, zwischen der Beschichtung aus dem Schmelzklebstoff und der wasserundurchlässigen Substratschicht eine Sperrschicht aufzubringen.

Darüber hinaus ist es bevorzugt, wenn die Beschichtung umfassend einen Schmelzklebstoff und ein flächiges Element aus einem elektrisch leitfähigen Material eine Dicke im Bereich von etwa 0,015 bis 5,5 mm, bevorzugt etwa 0,05 bis 2 mm, und am insbesondere bevorzugt etwa 0,1 bis 1,1 mm aufweist.

Für die wasserundurchlässige Substratschicht ist es schließlich bevorzugt, wenn sie in Form einer wasserdichten Membran, bevorzugt einer wasserdichten Dachmembran, vorliegt. Demzufolge sollte die Membran eine Form und Dimensionen aufweisen, wie sie normalerweise bei wasserdichten Membranen bzw. Dachmembranen vorhanden sind.

Ein zweiter Aspekt der vorliegenden Erfindung betrifft ein Verfahren zum Aufbringen einer wie vorstehend geschilderten Kompositfolie auf einem Substrat, das dadurch gekennzeichnet, dass
i) die Kompositfolie auf das Substrat aufgelegt wird,
ii) die Kompositfolie so lange einem magnetischen Wechselfeld ausgesetzt wird, bis der Schmelzklebstoff erweicht oder geschmolzen ist, und
iii) der Schmelzklebstoff unter Ausbildung eines Verbunds mit dem Substrat unter seinen Erweichungspunkt abgekühlt wird.

Innerhalb des beschriebenen Verfahrens führt die Wechselwirkung des magnetischen Wechselfelds mit dem flächigen Element aus einem elektrisch leitfähigen Material zu einer Erwärmung des Materials; man spricht auch von einem induktiven Erhitzen. Dabei erzeugt ein alternierendes magnetisches Feld, das von einem Induktor generiert wird, im elektrisch leitenden Material einen Strom, der Aufgrund des elektrischen Widerstands des Materials in Wärme umgewandelt wird. Dies hat zur Folge, dass sich Materialien mit höherem elektrischem Widerstand unter denselben Induktionsbedingungen schneller erhitzen. Damit ist auch die Effizienz solcher Materialien beim induktiven Erhitzen höher. Die Frequenz des magnetischen Wechselfeldes hat einen wesentlichen Einfluss auf die Eindringtiefe in das Material, sowie die minimale Schichtdicke des leitenden Materials, das effektiv mit dem angewandten magnetischen Feld koppelt. Die Eindringtiefe nimmt mit zunehmender Leitfähigkeit ab (siehe Figur 1).

Innerhalb des Verfahrens führt es zu besseren Verklebungsergebnissen, wenn die Kompositfolie während des Abkühlens mit Druck beaufschlagt wird, indem sie z.B. angedrückt wird, bis sich der Verbund mit einem darunter liegenden Substrat gebildet hat und vorzugsweise, bis sich der Schmelzklebstoff hinreichend unter seinen Erweichungspunkt abgekühlt hat und somit ein fester Verbund entstanden ist.

In Bezug auf die Frequenz des magnetischen Wechselfeldes bestehen keine wesentlichen Anforderungen mit der Maßgabe, dass das magnetische Wechselfeld eine Frequenz im Bereich von etwa 1 bis etwa 10000 kHz aufweisen sollte. Im Rahmen der vorliegenden Erfindung hat es sich jedoch gezeigt, dass insbesondere Frequenzen im Bereich von 50 bis 400 kHz und bevorzugt 80 bis 250 kHz zu geringen Erwärmungszeiten und geeigneten Heizraten führen.

Darüber hinaus ist es bevorzugt, wenn der das magnetische Wechselfeld erzeugende Induktor mit einer Leistung von etwa 0,05 bis 20 kW, bevorzugt 0,1 bis 10 kW, und besonders bevorzugt 0,15 bis 5 kW, betrieben wird. Für entsprechende Leistungen konnten bei Dicken eines flächigen Elements aus Metall von etwa 30 µm ausreichende Heizraten und schnelle Erwärmungszeiten auf eine Temperatur von etwa 100°C gemessen werden. Dies ist vorteilhaft um eine Verarbeitungszeit zu erreichen, die mit konventionellen Verfahren, bei denen der Schmelzklebstoff durch Flammeinwirkung aktiviert wird, vergleichbar ist.

Dem Fachmann ist ersichtlich, dass die Parameter der Frequenz, Leistung und der Oberfläche des das magnetische Wechselfeld erzeugenden Induktors miteinander wechselwirken und so die Erhitzungsgeschwindigkeit des Schmelzklebstoffs maßgeblich bestimmen. Die genannten Parameter, d.h. die Leistung, Frequenz und Oberfläche des das magnetische Wechselfeld erzeugenden Induktors, sind daher zweckmäßig so aufeinander abgestimmt, dass der Schmelzklebstoff mit einer Rate von mindestens 16 K/s, bevorzugt mindestens 20 K/s erhitzt wird. Der Fachmann ist ohne weiteres in der Lage, eine entsprechende Abstimmung der genannten Parameter vorzunehmen.

Im Rahmen der vorliegenden Erfindung ist es weiterhin bevorzugt, wenn zur Bereitstellung des magnetischen Wechselfeldes ein tragbarer Generator verwendet wird, da dies insbesondere bei der Applikation der Kompositfolien auf Dachoberflächen eine ausreichende Mobilität des Induktors gewährleistet. Ein Beispiel für einen im Rahmen der vorliegenden Erfindung geeigneten Induktor, sowie eine sinnvolle Geometrie für die Induktoroberfläche ist beispielsweise in der US 2006/157477 A1 beschrieben, deren Offenbarungsgehalt hiermit durch Bezugnahme eingeschlossen sein soll.

Da es sich bei Dachmembranen um großflächige Applikationen handelt, ist es weiterhin bevorzugt, wenn der das magnetische Wechselfeld erzeugende Generator eine Oberfläche des Induktors aufweist, die mindestens 1000 mm² beträgt. Bevorzugt ist eine Oberfläche des Induktors im Bereich von 6000 bis 200000 mm², und besonders bevorzugt 50000 bis 150000 mm².

Ein weiterer Aspekt der vorliegenden Erfindung befasst sich mit der Verwendung eines magnetischen Wechselfelds zum Aktivieren eines Schmelzklebstoffs und zum Verkleben von Kompositfolien, wie sie vorstehend beschrieben sind, auf ein Substrat. Bevorzugt handelt es sich bei dem Substrat, auf dem die Kompositfolie zu verkleben ist, um ein Betonsubstrat, eine Wärmedämmung mit allfälliger Schutzschicht oder eine Gips oder Faserplatte.

Nachfolgend wird die vorliegende Erfindung anhand einiger Beispiele näher erläutert, die jedoch keinen Einfluss im Sinne einer Beschränkung der vorliegenden Erfindung haben sollen.

### Beispiel 1

Eine Standarddachmembran (Sikaplan G410-12EL) wurde mit einem Schmelzklebstoff vom Typ Sikatherm 4250 in einer Schichtdicke von 200 µm beschichtet, wobei in diese Schicht ein Stahlpulver (11 Vol.-%), ein ferrimagnetisches Eisenpigment (braunes Fe₃O₄; 10 Vol.-%) und ein Metallgewebe des Typs Sefar Nytex 26-245/62 eingebettet wurde. Die so beschichteten Membranen wurden 60 Sekunden (Stahlpulver & Eisenpigment) bzw. 20 Sekunden (Metallgewebe) mit einem elektromagnetischen Wechselfeld unter den Bedingungen (i) 105 kHz/5 kW, (ii) 105 kHz/7,5 kW und (iii) 160 kHz/4,5 kW behandelt. Die Ergebnisse dieser Untersuchungen sind in Figur 2 wiedergegeben. Die angegebenen Temperaturen wurde mit Hilfe eines konventionellen Thermo couple (Typ K) unmittelbar nach Abschalten des elektromagnetischen Feldes bestimmt.

In den Untersuchungen zeigte sich, dass die Probe mit dem Metallgewebe nach der Behandlung die höchste Temperatur aufwies. Demgegenüber zeigten die Kompositfolien mit ferrimagnetischem Eisenpulver und ferromagnetischen Eisenpigmenten nur eine unzureichende bis gar keine Erwärmung. Überraschend war dabei, dass ein Gehalt von 10 Vol.-% Metallpulver nicht zu einer signifikanten Temperaturerhöhung im Vergleich zu unbeschichteten Sikaplan G410-12EL-Membranen führte. Demzufolge ist ein Anteil von 10 Vol.-% Metallpulver nicht ausreichend, um ein kohärentes und damit leitfähiges Netzwerk zu bilden.

### Beispiel 2

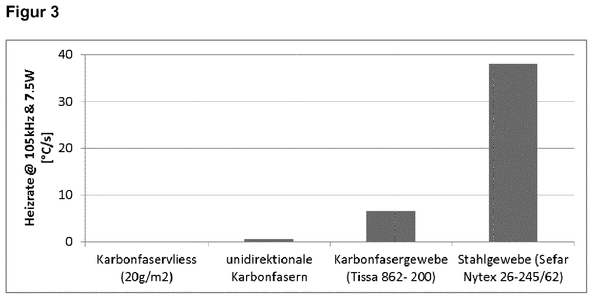

An Stelle eines Metallgewebes des Typs Sefar Nytex 26-245/62 wurden in einem weiteren Versuch verschiedene Carbonfaser-basierte Materialien untersucht. Dazu wurden unidirektionale Carbonfasern, ein Carbonfasergewebe des Typs Tissa 862-200 und ein Carbonfaservlies verwendet, die in die Klebstoffschicht eingebettet wurden, wie das Metallgewebe. Die so hergestellten Kompositfolien wurden einem magnetischen Wechselfeld mit einer Frequenz von 105 kHz mit einer Leistung von 7,5 kW behandelt und die Heizrate der Klebstoffschichten wurde bestimmt. Die Ergebnisse dieser Messungen sind in Figur 3 wiedergegeben.

Es zeigte sich, dass Wärme nur bei den Proben mit geschlossenen Faserkreisen generiert werden konnte (d.h., bei der Probe mit Carbonfasergewebe bzw. Eisengewebe). Die Probe mit Carbonfasergewebe erhitzte sich mit einer akzeptablen Rate von 6,5°C/s, während bei der Probe mit Eisengewebe sogar eine Heizrate von etwa 40°C/s bestimmt werden konnte. Demgegenüber zeigten die Proben mit Carbonfaservlies oder einer Beimischung von unidirektionalen Carbonfasern keine signifikante Erwärmung.

### Beispiel 3

Auf eine mit einem Stahlgewebe oder einer Aluminiumfolie beschichteten Membran des Typs Sikaplan G14-12EL (auf Basis von PVC; Dicke ca. 1,2 mm) wurde eine 200 µm dicke Beschichtung aus einem Schmelzklebstoff auf Basis von EVA (Sarnacoll 2121) aufgebracht. Bei dem Stahlgewebe bezeichnet die Schichtdicke die Dicke der einzelnen Gewebestränge (siehe Tabelle 1). Die so erhaltenen Kompositfolien wurden mit einem elektromagnetischen Wechselfeld mit der in der folgenden Tabelle 1 angegebenen Frequenz und Leistung behandelt. Dabei wurde die Zeit, innerhalb der sich der Schmelzklebstoff von 25°C auf 100°C erhitzt, sowie die Heizrate des Schmelzklebstoffs bestimmt. Der für das Erhitzen verwendete Induktor wies eine Oberfläche von 6900 mm² auf.

**Tabelle 1:**

| Beispiel | | 1 | 2 | 3 | 4 | | 5 | 6 | 7 |
|---|---|---|---|---|---|---|---|---|---|
| *Klebstoff* | | Hotmelt | | | | | | | |
| Typ | | EVA | | | | | | | |
| Schichtdicke | [mm] | 0.2 | | | | | | | |
| | | | | | | | | | |
| *Membran* | | SikaPlan G410 - 12EL | | | | | | | |
| Typ | | PVC Dachmembran | | | | | | | |
| Dicke | | 1.2mm | | | | | | | |
| | | | | | | | | | |
| Induktor Fläche | [mm²] | 6900 | | | | | | | |
| | | | | | | | | | |
| *elektrischer Leiter* | | | | | | | | | |
| Typ | | rostfreier Stahl | | | | | Aluminium | | |
| Schichtdicke | | ca. 30 µm | | | ca. 125 µm | | ca. 30 µm | | |
| *Induktionsparameter* | | | | | | | | | |
| Frequenz | [kHz] | 100 | 100 | 225 | 100 | | 100 | 100 | 225 |
| Leistungs | [kW] | 1.5 | 1 | 1 | 1.5 | | 0.2 | 0.15 | 0.2 |
| | | | | | | | | | |
| *Erwärmungszeit* | | | | | | | | | |
| 25 - 100°C | [s] | 5 | 9 | 3 | 2 | | 6 | 10 | 3 |
| Heizrate | [K/s] | 15.0 | 8.3 | 25.0 | 37.5 | | 12.5 | 7.5 | 25.0 |

Der Vergleich der Proben 1, 2 oder 3 mit den Proben 5, 6 oder 7 zeigt, dass die benötigte Leistung zur Erwärmung des Klebstoffs bei rostfreiem Stahl im Vergleich zu Aluminium um den Faktor 5 bis 6 höher ist. Dies entspricht ungefähr dem Unterschied in der Eindringtiefe des elektrischen Felds für die beiden Materialien. Der Beispiele 3 und 7 zeigen zudem, dass die Erhöhung der Frequenz zu einer Reduktion der Erwärmungszeit für die beiden untersuchten elektrisch leitenden Materialien führt und damit zu einer Erhöhung der Heizgeschwindigkeit. Aus Beispiel 4 geht hervor, dass eine dickere Schicht des elektrisch leitfähigen Materials (Eisen) bei gleicher Frequenz ebenfalls zu einer Reduktion der Erwärmungszeit führt. Beide Beobachtungen (d.h. der Einfluss der Frequenz und der Schichtdicke des Leiters) sind in Einklang mit der Eindringtiefe des elektromagnetischen Feldes in den elektrischen Leiter. Die erhöhte Frequenz bündelt die abgegebene Ausgangsleistung in einer dünneren Schicht, während die dickere Schicht ein erhöhtes Maß der abgegebenen Ausgangsleistung aufnimmt. Die Effizienz der induktiven Erwärmung kann somit durch die Erhöhung der Schichtdicke des flächigen Elements aus einem elektrisch leitfähigen Material gesteigert werden.

## Patentansprüche

1. Kompositfolie, umfassend eine wasserundurchlässige Substratschicht aus Kunststoff mit einer Beschichtung umfassend ein flächiges Element aus einem elektrisch leitfähigen Material und einen Schmelzklebstoff, wobei das flächige Element aus einem elektrisch leitfähigen Material aus einem Metall oder einer Metalllegierung besteht, **dadurch gekennzeichnet, dass** der Schmelzklebstoff eine äußere Oberfläche der Kompositfolie bildet.

2. Kompositfolie nach Anspruch 1, **dadurch gekennzeichnet, dass** das flächige Element aus einem elektrisch leitfähigen Material in Form einer Metall folie oder eines Metallnetzes vorliegt.

3. Kompositfolie nach Anspruch 1 oder 2, **dadurch gekennzeichnet, dass** das flächige Element aus einem elektrisch leitfähigen Material aus einem Metall oder einer Metalllegierung besteht, das bzw. die aus Stahl, Aluminium, Messing oder Kupfer ausgewählt ist.

4. Kompositfolie nach Anspruch 2 oder 3, **dadurch gekennzeichnet, dass** das flächige Element aus einem elektrisch leitfähigen Material in Form eines Metallgewebes vorliegt, dass in einen Schmelzklebstoff eingebettet ist.

5. Kompositfolie nach einem der vorstehenden Ansprüche, **dadurch gekennzeichnet, dass** das flächige Element aus einem elektrisch leitfähigen Material eine Dicke im Bereich von 1 bis 500 µm aufweist.

6. Kompositfolie nach einem der vorstehenden Ansprüche, **dadurch gekennzeichnet, dass** das flächige Element aus einem elektrisch leitfähigen Material eine Dicke im Bereich von 5 bis 100 µm aufweist

7. Kompositfolie nach einem der vorstehenden Ansprüche, **dadurch gekennzeichnet, dass** die wasserundurchlässige Substratschicht auf einem thermoplastischen Polyolefin oder PVC beruht.

8. Kompositfolie nach einem der vorstehenden Ansprüche, **dadurch gekennzeichnet, dass** der Schmelzklebstoff auf Ethylenvinylacetat beruht.

9. Kompositfolie nach einem der vorstehenden Ansprüche, **dadurch gekennzeichnet, dass** die Beschichtung umfassend einen Schmelzklebstoff und ein flächiges Element aus einem elektrisch leitfähigen Material eine Dicke im Bereich von 0,05 bis 2 mm aufweist.

10. Kompositfolie nach einem der vorstehenden Ansprüche, **dadurch gekennzeichnet, dass** die Substratschicht in Form einer wasserdichten Membran vorliegt.

11. Verfahren zum Aufbringen einer Kompositfolie gemäß einem der Ansprüche 1 bis 10 auf einem Substrat, **dadurch gekennzeichnet, dass**
i) die Kompositfolie auf das Substrat aufgelegt wird,
ii) die Kompositfolie so lange einem magnetischen Wechselfeld ausgesetzt wird, bis der Schmelzklebstoff erweicht oder geschmolzen ist, und
iii) der Schmelzklebstoff unter Ausbildung eines Verbunds mit dem Substrat unter seinen Erweichungspunkt abgekühlt wird.

12. Verfahren nach Anspruch 11, **dadurch gekennzeichnet, dass** die Kompositfolie während des Abkühlens mit Druck beaufschlagt wird, bis sich der Verbund gebildet hat.

13. Verfahren nach Anspruch 11 oder 12, **dadurch gekennzeichnet, dass** das magnetische Wechselfeld eine Frequenz im Bereich von 50 bis 400 kHz aufweist.

14. Verfahren nach einem der Ansprüche 11 bis 13, **dadurch gekennzeichnet, dass** der das magnetische Wechselfeld erzeugende Induktor mit einer Leistung von 0,05 bis 20 kWbetrieben wird.

15. Verfahren nach einem der Ansprüche 11 bis 14, **dadurch gekennzeichnet, dass** die Leistung, Frequenz und Oberfläche des das magnetische Wechselfeld erzeugenden Induktors so aufeinander abgestimmt sind, dass der Schmelzklebstoff mit einer Rate von mindestens 16 K/s erhitzt wird.

16. Verfahren nach einem der Ansprüche 11 bis 15, **dadurch gekennzeichnet, dass** zur Bereitstellung des magnetischen Wechselfeldes ein mobiler Generator verwendet wird.

17. Verfahren nach einem der Ansprüche 11 bis 16, **dadurch gekennzeichnet, dass** der das magnetische Wechselfeld erzeugende Induktor eine Oberfläche von mindestens 1000 mm²aufweist.

18. Verwendung eines magnetischen Wechselfelds zum Aktivieren eines Schmelzklebstoffs und zum Verkleben von Kompositfolien gemäß einem der Ansprüche 1 bis 10 auf ein Substrat.

19. Verwendung nach Anspruch 18, **dadurch gekennzeichnet, dass** das Substrat ein Betonsubstrat, eine Wärmedämmung mit allfälliger Schutzschicht oder eine Gips- oder Faserplatte ist.

## Claims

1. Composite film comprising a water-impermeable substrate layer composed of plastic with a coating comprising a flat element composed of an electrically conductive material and a hotmelt adhesive wherein the flat element composed of an electrically conductive material consists of a metal or metal alloy, **characterized in that** the hotmelt adhesive forms an outer surface of the composite film.

2. Composite film according to Claim 1, **characterized in that** the flat element composed of an electrically conductive material takes the form of a metal foil or metal mesh.

3. Composite film according to Claim 1 or 2, **characterized in that** the flat element composed of an electrically conductive material consists of a metal or metal alloy selected from steel, aluminium, brass or copper.

4. Composite film according to Claim 2 or 3, **characterized in that** the flat element composed of an electrically conductive material takes the form of a metal weave embedded into a hotmelt adhesive.

5. Composite film according to any of the preceding claims, **characterized in that** the flat element composed of an electrically conductive material has a thickness in the range from 1 to 500 µm.

6. Composite film according to any of the preceding claims, **characterized in that** the flat element composed of an electrically conductive material has a thickness in the range from 5 to 100 µm.

7. Composite film according to any of the preceding claims, **characterized in that** the water-impermeable substrate layer is based on a thermoplastic polyolefin or PVC.

8. Composite film according to any of the preceding claims, **characterized in that** the hotmelt adhesive is based on ethylene-vinyl acetate.

9. Composite film according to any of the preceding claims, **characterized in that** the coating comprising a hotmelt adhesive and a flat element composed of an electrically conductive material has a thickness in the range from 0.05 to 2 mm.

10. Composite film according to any of the preceding claims, **characterized in that** the substrate layer takes the form of a watertight membrane.

11. Method of applying a composite film according to any of Claims 1 to 10 to a substrate, **characterized in that**
i) the composite film is placed onto the substrate,
ii) the composite film is exposed to an alternating magnetic field until the hotmelt adhesive has softened or melted, and
iii) the hotmelt adhesive is cooled down below its softening point to form a bond with the substrate.

12. Method according to Claim 11, **characterized in that** the composite film is subjected to pressure during the cooling until the bond has formed.

13. Method according to Claim 11 or 12, **characterized in that** the alternating magnetic field has a frequency in the range from 50 to 400 kHz.

14. Method according to any of Claims 11 to 13, **characterized in that** the inductor that produces the alternating magnetic field is operated with a power from 0.05 to 20 kW.

15. Method according to any of Claims 11 to 14, **characterized in that** the power, frequency and surface area of the inductor that produces the alternating magnetic field are matched to one another such that the hotmelt adhesive is heated at a rate of at least 16 K/s.

16. Method according to any of Claims 11 to 15, **characterized in that** the alternating magnetic field is provided using a mobile generator.

17. Method according to any of Claims 11 to 16, **characterized in that** the inductor that produces the alternating magnetic field has a surface area of at least 1000 mm².

18. Use of an alternating magnetic field for activating a hotmelt adhesive and for bonding of composite films according to any of Claims 1 to 10 to a substrate.

19. Use according to Claim 18, **characterized in that** the substrate is a concrete substrate, a thermal insulation with any protective layer or a gypsum board or fibreboard.

## Revendications

1. Feuille composite, comprenant une couche de substrat imperméable à l'eau en matière plastique avec un revêtement comprenant un élément plat en un matériau électriquement conducteur et un adhésif thermofusible, l'élément plat en un matériau électriquement conducteur étant constitué par un métal ou un alliage de métal, **caractérisée en ce que** l'adhésif thermofusible forme une surface extérieure de la feuille composite.

2. Feuille composite selon la revendication 1, **caractérisée en ce que** l'élément plat en un matériau électriquement conducteur se présente sous la forme d'une feuille métallique ou d'un filet métallique.

3. Feuille composite selon la revendication 1 ou 2, **caractérisée en ce que** l'élément plat en un matériau électriquement conducteur est constitué par un métal ou un alliage de métal qui est choisi parmi l'acier, l'aluminium, le laiton ou le cuivre.

4. Feuille composite selon la revendication 2 ou 3, **caractérisée en ce que** l'élément plat en un matériau électriquement conducteur se présente sous la forme d'un tissu métallique qui est incorporé dans un adhésif thermofusible.

5. Feuille composite selon l'une quelconque des revendications précédentes, **caractérisée en ce que** l'élément plat en un matériau électriquement conducteur présente une épaisseur dans la plage allant de 1 à 500 µm.

6. Feuille composite selon l'une quelconque des revendications précédentes, **caractérisée en ce que** l'élément plat en un matériau électriquement conducteur présente une épaisseur dans la plage allant de 5 à 100 µm.

7. Feuille composite selon l'une quelconque des revendications précédentes, **caractérisée en ce que** la couche de substrat imperméable à l'eau est à base d'une polyoléfine thermoplastique ou de PVC.

8. Feuille composite selon l'une quelconque des revendications précédentes, **caractérisée en ce que** l'adhésif thermofusible est à base d'éthylène-acétate de vinyle.

9. Feuille composite selon l'une quelconque des revendications précédentes, **caractérisée en ce que** le revêtement comprenant un adhésif thermofusible et un élément plat en un matériau électriquement conducteur présente une épaisseur dans la plage allant de 0,05 à 2 mm.

10. Feuille composite selon l'une quelconque des revendications précédentes, **caractérisée en ce que** la couche de substrat se présente sous la forme d'une membrane étanche à l'eau.

11. Procédé d'application d'une feuille composite selon l'une quelconque des revendications 1 à 10 sur un substrat, **caractérisé en ce que**
i) la feuille composite est disposée sur le substrat,
ii) la feuille composite est exposée à un champ alternatif magnétique jusqu'à ce que l'adhésif thermofusible ramollisse ou fonde, et
iii) l'adhésif thermofusible est refroidi en dessous de son point de ramollissement avec formation d'un composite avec le substrat.

12. Procédé selon la revendication 11, **caractérisé en ce que** la feuille composite est soumise à une pression pendant le refroidissement, jusqu'à ce que le composite se soit formé.

13. Procédé selon la revendication 11 ou 12, **caractérisé en ce que** le champ alternatif magnétique présente une fréquence dans la plage allant de 50 à 400 kHz.

14. Procédé selon l'une quelconque des revendications 11 à 13, **caractérisé en ce que** l'inducteur générant le champ alternatif magnétique est exploité avec une puissance de 0,05 à 20 kW.

15. Procédé selon l'une quelconque des revendications 11 à 14, **caractérisé en ce que** la puissance, la fréquence et la surface de l'inducteur générant le champ alternatif magnétique sont accordées les unes aux autres de telle sorte que l'adhésif thermofusible soit chauffé à une vitesse d'au moins 16 K/s.

16. Procédé selon l'une quelconque des revendications 11 à 15, **caractérisé en ce qu'**un générateur mobile est utilisé pour la mise à disposition du champ alternatif magnétique.

17. Procédé selon l'une quelconque des revendications 11 à 16, **caractérisé en ce que** l'inducteur générant le champ alternatif magnétique présente une surface d'au moins 1 000 mm².

18. Utilisation d'un champ alternatif magnétique pour l'activation d'un adhésif thermofusible et pour le collage de feuilles composites selon l'une quelconque des revendications 1 à 10 sur un substrat.

19. Utilisation selon la revendication 18, **caractérisée en ce que** le substrat est un substrat en béton, une isolation thermique éventuellement munie d'une couche de protection ou un panneau de gypse ou de fibres.
